# EUROPÄISCHE PATENTANMELDUNG

(11) **EP 4 095 697 A1**
(43) Veröffentlichungstag der Anmeldung: **30.11.2022**
(21) Anmeldenummer: 22186140.4
(22) Anmeldetag: 04.03.2020
(51) Int. Cl.: G06F 11/34, G06F 11/07, G06F 17/40

(54) **VERFAHREN ZUR CHARAKTERISIERUNG DES BETRIEBSZUSTANDS EINES COMPUTERSYSTEMS**

(30) Priorität: 02.04.2019 AT 502852019
(62) Teilanmeldung aus: 20160854.4
(71) Anmelder: AIT Austrian Institute of Technology GmbH, 1210 Wien (AT)
(72) Erfinder: WURZENBERGER, Wiesengasse 23-2574, 1090 Wien (AT); HÖLD, Georg, 3500 Krems (AT); LANDAUER, Max, 1070 Wien (AT); SKOPIK, Florian, 2000 Stockerau (AT)
(74) Vertreter: Wildhack & Jellinek

(57) **Zusammenfassung**

Die Erfindung betrifft ein Verfahren zur Charakterisierung des Betriebszustands eines Computersystems (1), wobei in einer Trainingsphase
- von dem Computersystem (1) während des Betriebs des Computersystems (1) Protokolle erstellt werden, indem von dem Computersystem (1) bei Auftreten vorgegebener Ereignisse für jedes dieser Ereignisse jeweils ein Protokolldatensatz in Form einer Protokollzeile (P; P₁, P₂, P₃) erstellt wird,
- die Protokollzeilen (P; P₁, P₂, P₃) nach einer vorgegebenen Metrik hinsichtlich ihrer Ähnlichkeit analysiert werden und aufgrund ihrer Ähnlichkeit zu Gruppen zusammengefasst werden,
- für jede der derart ermittelten Gruppen ein Template (T, T*) erstellt wird,
wobei das Template (T, T*) die Struktur der einer jeweiligen Gruppe zugeordneten Protokollzeilen (P; P₁, P₂, P₃) beschreibt, insbesondere jeweils eine Liste von konstanten Substrings, gegebenenfalls unterbrochen durch unterschiedliche Zeichenketten, angibt, die in ihrer Reihenfolge in ausgewählten, insbesondere allen, Protokollzeilen (P; P₁, P₂, P₃) einer jeweiligen Gruppe vorhanden sind, und
- die einzelnen ermittelten Gruppen von Protokollzeilen (P; P₁, P₂, P₃) und die den Gruppen zugeordneten Templates (T, T*) charakteristisch für den Betriebszustand des Computersystems (1) sind.

## Beschreibung

Die Erfindung betrifft ein Verfahren zur Charakterisierung des Betriebszustands eines Computersystems gemäß Patentanspruch 1, ein Verfahren zur Detektion von anomalen Betriebszuständen eines Computersystems gemäß Patentanspruch 2, sowie einen Datenträger gemäß Patentanspruch 17.

Aus dem Stand der Technik ist bekannt, Protokolldateien, die von unterschiedlichen ablaufenden Prozessen eines Computersystems erstellt werden, daraufhin zu untersuchen, ob die in den Protokolldateien beschriebenen Vorgänge einen anomalen Zustand der Prozesse bzw. des Computers darstellen, in dem diese Prozesse ablaufen. Bei den bekannten Verfahren bestehen wesentliche Probleme, die üblicherweise in für Menschen lesbarer Form geschriebenen Protokolldateien rasch und zuverlässig auf bestimmte Muster hin zu analysieren, um somit Betriebszustände zu erkennen, die ungewöhnlich oder einzigartig sind und auf anomale Betriebszustände des Computersystems hindeuten. Diese Probleme umfassen zum Beispiel korrektes Parsen der Daten, da es keine Standards gibt, die Syntax und Semantik der Daten festlegen und dass der Vergleich von Textzeilen kompliziert und rechenintensiv ist.

Aus dem Stand der Technik sind beispielsweise einzelne Verfahren bekannt, die jeweils zwei unterschiedliche Protokollzeilen aus Protokolldateien miteinander vergleichen, auf diese Weise typische Muster ableiten und derart anomale Betriebszustände eines Computersystems detektieren. Der Vergleich erfolgt dabei üblicherweise Token-basiert zwischen jeweils zwei Protokollzeilen, d.h. dass vorausgesetzt wird, dass die Protokollzeilen aus Zeichenblöcken bzw. Substrings bestehen, die durch vorgegebene Zeichen, wie z.B. Leerzeichen, voneinander getrennt sind.

Derartige Vorgehensweisen ermöglichen grundsätzlich das Auffinden von anomalen Zuständen in einem Computersystem, sind jedoch aufgrund des nur paarweisen Vergleichs mit einem hohen Ressourcenbedarf und darausfolgendem Zeitaufwand verbunden, wenn eine große Anzahl von Protokollzeilen untersucht werden soll, da jede einzelne Protokollzeile mit allen anderen bereits als gutartig klassifizierten Protokollzeilen verglichen werden muss.

Aufgabe der vorliegenden Erfindung ist es daher, diese Probleme zu lösen und ein Verfahren zur Charakterisierung des Betriebszustands eines Computersystems bereitzustellen, das rasch und auf effiziente Weise Protokollzeilen miteinander vergleicht und derart kritische oder anomale Zustände in einem Computersystem zuverlässig und ressourcensparend erkennt.

Die Erfindung löst diese Aufgabe mit einem Verfahren zur Charakterisierung des Betriebszustands eines Computersystems, wobei in einer Trainingsphase
- von dem Computersystem während des Betriebs des Computersystems Protokolle erstellt werden, indem von dem Computersystem bei Auftreten vorgegebener Ereignisse für jedes dieser Ereignisse jeweils ein Protokolldatensatz in Form einer Protokollzeile erstellt wird,
- die Protokollzeilen nach einer vorgegebenen Metrik hinsichtlich ihrer Ähnlichkeit analysiert werden und aufgrund ihrer Ähnlichkeit zu Gruppen zusammengefasst werden,
- für jede der derart ermittelten Gruppen ein Template erstellt wird,
   wobei das Template die Struktur der einer jeweiligen Gruppe zugeordneten Protokollzeilen beschreibt, insbesondere jeweils eine Liste von konstanten Substrings, gegebenenfalls unterbrochen durch unterschiedliche Zeichenketten, angibt, die in ihrer Reihenfolge in ausgewählten, insbesondere allen, Protokollzeilen einer jeweiligen Gruppe vorhanden sind, und
- die einzelnen ermittelten Gruppen von Protokollzeilen und die den Gruppen zugeordneten Templates charakteristisch für den Betriebszustand des Computersystems sind.

Die Erfindung betrifft weiters ein Verfahren zur Detektion von anormalen Betriebszuständen eines Computersystems. Erfindungsgemäß ist dabei vorgesehen,
- dass eine erfindungsgemäße Charakterisierung des Betriebszustands des Computersystems durchgeführt wird, sodass nach der Trainingsphase eine Anzahl von den jeweiligen Gruppen von Protokollzeilen zugeordneten Templates vorliegen,
- dass vom Computersystem eine neue Protokollzeile erstellt wird,
- dass überprüft wird, ob diese neue Protokollzeile einem der bereits aufgefundenen Templates entspricht, und
- dass im Fall, dass die neue Protokollzeile keinem der aufgefundenen Templates entspricht, ein anomaler Betriebszustand des Computersystems erkannt wird.

Um Veränderungen des Computersystems bei der Charakterisierung des Betriebszustands berücksichtigen zu können, kann vorgesehen sein, dass in einer erneuten Trainingsphase
- die Protokollzeilen nach einer vorgegebenen Metrik erneut hinsichtlich ihrer Ähnlichkeit analysiert und aufgrund ihrer Ähnlichkeit zu Gruppen zusammengefasst werden und für jede der derart ermittelten Gruppen erneut ein Template erstellt wird, oder
- die zuvor vorliegenden Gruppen um neu hinzugekommene Protokollzeilen erweitert werden und im Fall, dass einer zuvor vorliegenden Gruppe eine neue Protokollzeile zugeordnet wird, das Template der jeweiligen Gruppe erneut angepasst wird, und
- insbesondere vorgesehen ist, dass im Fall, dass eine neue Protokollzeile als keinem der zuvor aufgefundenen Templates entsprechend erkannt wurde, in der erneuten Trainingsphase eine neue Gruppe enthaltend die neue Protokollzeile erstellt wird und ein Template für die jeweilige neue Gruppe berechnet wird.

Zur Erstellung eines Templates auf Grundlage der einer jeweiligen Gruppe zugeordneten Protokollzeilen kann dabei vorgesehen werden, dass
- ein initiales Template vorgegeben wird, insbesondere eine erste Protokollzeile einer jeweiligen Gruppe als initiales Template vorgegeben wird, und
- für ausgewählte, vorzugsweise alle weiteren, der jeweiligen Gruppe zugeordneten Protokollzeilen
   - ein Abgleich der jeweiligen Protokollzeile mit dem jeweiligen Template durchgeführt und jeweils ein weiteres Templates erstellt wird, wobei das weitere Template der Struktur der jeweiligen Protokollzeile sowie der Struktur ausgewählter, insbesondere aller, zuvor abgeglichenen Protokollzeilen entspricht, und
   - das jeweils zuletzt auf Grundlage ausgewählter, insbesondere aller, zum jeweiligen Zeitpunkt in der Gruppe vorhandenen Protokollzeilen erstellte weitere Template als jeweils für die gesamte Gruppe repräsentatives Template herangezogen wird, und
- der Abgleich zwischen einer, einer jeweiligen Gruppe zugeordneten, Protokollzeile und dem initialen Template und/oder einem weiteren Template unter Heranziehung einer vorgegebenen String-Metrik, insbesondere der Levenshtein-Distanz, durchgeführt wird.

Vorteile einer derartigen, Zeichen-basierten Analyse von Protokollzeilen und Gruppierung von ähnlichen Protokollzeilen zu Gruppen sind eine, im Vergleich zu Token-basierten Methoden, verbesserte Erkennung von Mustern in den Gruppen, die sich durch einen höheren Detailgrad auszeichnet, und ein verbesserter Umgang mit Sonderzeichen, da diese beim Vergleich erhalten bleiben. Weiters brauchen keine Delimiter, d.h. vorgegebenen Zeichen, die Zeichenblöcke bzw. Substrings voneinander trennen, vorgegeben werden, was besonders beim Vergleich von Protokollzeilen, die von unterschiedlichen Plattformen stammen, vorteilhaft ist, da die Delimiter je nach verwendeter Plattform variieren können. Darüber hinaus können Zeichen-basierte Ansätze im Vergleich zu Token-basierten Synonyme, die sich nur durch wenige Zeichen unterscheiden, erkennen und ermöglichen daher eine verbesserte Analyse.

Eine alternative Variante zur Bereitstellung eines initialen Templates sieht vor, dass für den Fall, dass zur Erstellung eines initialen Templates ein Abgleich zwischen zwei einer jeweiligen Gruppe zugeordneten Protokollzeilen durchgeführt wird, wobei der Abgleich unter Heranziehung einer vorgegebenen String-Metrik, insbesondere der Levenshtein-Distanz, durchgeführt wird. Durch die Berechnung des initialen Templates als das paarweise Alignment zweier Zeilen kann diese durch den Einsatz bekannter optimierter Algorithmen durchgeführt werden.

Ein besonders vorteilhafter Aufbau eines Templates kann gewährleistet werden, wenn das Template jeweils
- eine Liste von konstanten Substrings umfasst, die in ihrer Reihenfolge in ausgewählten, insbesondere allen, zuvor abgeglichenen Protokollzeilen einer jeweiligen Gruppe vorhanden sind, sowie
- gegebenenfalls Information über den Inhalt der Zwischenräume zwischen den Substrings umfasst.

Ein Zeichen-basiertes Template liefert weitaus detailreichere Informationen über eine Gruppe von Protokollzeilen als ein Token-basiertes Template, da Beispielsweise Synonyme, die sich nur durch wenige Zeichen unterscheiden, erkennbar erhalten bleiben und nicht gänzlich durch Platzhalter ersetzt werden.

Ein besonders rasch durchzuführendes Verfahren zur Erstellung eines weiteren Templates basierend auf einem vorherigen Template kann bereitgestellt werden, wenn zur Erstellung des Templates basierend auf einem vorherigen oder initialen Template und einer jeweiligen Protokollzeile einer Gruppe,
- eine konstante Zeichenkette aus dem vorherigen Template durch Löschen der Zwischenräume zwischen den Substrings gebildet wird, und
- ein Abgleich zwischen einer jeweils neuen Protokollzeile und der konstanten Zeichenkette unter Anwendung einer vorgegebenen String-Metrik, insbesondere der Levenshtein-Distanz, durchgeführt wird und ein weiteres Template erstellt wird.

Durch die Reduktion des Templates durch Bildung einer Zeichenkette durch Zusammenführen der Substrings, die das Template definieren, kann ein besonders rascher und ressourcensparender Vergleich des Templates mit einer Protokollzeile gewährleistet werden, und somit effizient ein Template für eine Gruppe von Protokollzeilen gebildet werden, das in weiterer Folge zur Anomalie-Erkennung genutzt werden kann.

Ein Verfahren zur Erstellung eines weiteren Templates mit besonders geringer Laufzeit kann bereitgestellt werden, wenn
- zunächst in einer vorgegebenen Verarbeitungsrichtung, insbesondere von links nach rechts, die Substrings des vorherigen Templates den jeweils entsprechenden Abschnitten innerhalb der Protokollzeile zugeordnet werden, sofern diese in der jeweiligen Protokollzeile vorkommen,
- anschließend in der vorgegebenen Verarbeitungsrichtung für diejenigen Substrings des vorherigen Templates, denen noch kein entsprechender Abschnitt in der jeweiligen Protokollzeile zugeordnet wurde,
   - ein Abgleich mit den verbleibenden Abschnitten der jeweiligen Protokollzeile unter Anwendung einer vorgegebenen String-Metrik durchgeführt wird, insbesondere die Levenshtein-Distanz ermittelt wird, und
   - die verbleibenden Substrings des vorherigen Templates derart denjenigen verbleibenden Abschnitten der Protokollzeile zugeordnet werden, denen sie entsprechen,
      - wobei die Zuordnung von verbleibenden Substrings des vorherigen Templates zu verbleibenden Abschnitten der Protokollzeile jeweils nur an Positionen zwischen und/oder benachbart zu denjenigen Abschnitten der Protokollzeile erfolgt, die bereits entsprechenden Substrings des vorherigen Templates zugeordnet wurden und
      - wobei die Abfolge der Substrings des vorherigen Templates und die Abfolge der Abschnitte der Protokollzeile bei der Zuordnung jeweils unverändert bleiben.

Bei einem derartigen Verfahren wird vorteilhafterweise eine noch raschere Verarbeitungszeit sichergestellt, indem die Substrings aus dem vorherigen Template, welche in der betrachteten Protokollzeile als Substrings enthalten sind, einander zugeordnet bzw. markiert werden und daher nur diejenigen Substrings aus dem vorherigen Template, die nicht unmittelbar als Substrings in der betrachteten Protokolleile vorkommen, mit Ausschnitten aus der Protokollzeile abgeglichen zu werden brauchen.

Dadurch wird erreicht, dass für eine vergleichsweise geringere Anzahl an Substrings aus dem Template und insbesondere für kürzere Abschnitte eine String-Metrik angewendet werden und beispielsweise die Levenshtein-Distanz berechnet werden muss, sodass dadurch die Laufzeit deutlich verringert werden kann.

Ein Verfahren zur Erstellung eines weiteren Templates mit einer besonders hohen Qualität bzw. Repräsentativität für eine jeweilige Gruppe kann bereitgestellt werden, wenn zur Erstellung eines weiteren Templates basierend auf einem vorherigen oder initialen Template und einer jeweiligen Protokollzeile einer Gruppe,
- zunächst die Substrings des vorherigen Templates hinsichtlich ihrer Länge untersucht werden und geordnet nach deren Länge, insbesondere beginnend beim längsten bis hin zum kürzesten Substring, den entsprechenden Abschnitten innerhalb der Protokollzeile zugeordnet werden, sofern diese in der jeweiligen Protokollzeile vorkommen, und
- anschließend für diejenigen Substrings des vorherigen Templates, denen noch kein entsprechender Abschnitt in der jeweiligen Protokollzeile (P) zugeordnet wurde, geordnet nach deren Länge, insbesondere beginnend beim längsten bis hin zum kürzesten Substring,
   - ein Abgleich mit den verbleibenden Abschnitten der jeweiligen Protokollzeile unter Anwendung einer vorgegebenen String-Metrik durchgeführt wird, insbesondere die Levenshtein-Distanz ermittelt wird, und
   - die verbleibenden Substrings des vorherigen Templates derart denjenigen verbleibenden Abschnitten der Protokollzeile zugeordnet werden, denen sie entsprechen,
      - wobei die Zuordnung von verbleibenden Substrings des vorherigen Templates zu verbleibenden Abschnitten der Protokollzeile jeweils nur an Positionen zwischen und/oder benachbart zu denjenigen Abschnitten der Protokollzeile erfolgt, die bereits entsprechenden Substrings (st₁, ..., st₅) des vorherigen Templates zugeordnet wurden und
      - wobei die Abfolge der Substrings des vorherigen Templates und die Abfolge der Abschnitte der Protokollzeile bei der Zuordnung jeweils unverändert bleiben.

Ein mit einem derartigen Verfahren erstelltes Template ist vorteilhafterweise vergleichsweise weniger anfällig dafür, dass Substrings, die im Vergleich zu anderen Substrings relativ kurz sind, am Ende einer Protokollzeile als übereinstimmend mit einem Abschnitt am Ende einer Protokollzeile erkannt werden, und somit dafür sorgen, dass viele andere, insbesondere längere und daher aussagekräftigere Substrings des vorherigen Templates, unberücksichtigt bleiben und entfallen da, ohne die Reihenfolge der Substrings des vorherigen Templates zu verändern, kein passender freier Abschnitt mehr in der Protokollzeile vorhanden ist.

Eine besonders effizienter Abgleich zwischen Substrings eines vorherigen Templates und Abschnitten einer neuen Protokollzeile kann erzielt werden, wenn zunächst nur Substrings des vorherigen Templates, deren Länge eine vorgegebene Zeichenanzahl, insbesondere eine Länge von drei Zeichen, überschreitet, für die Zuordnung zu Abschnitten der Protokollzeile herangezogen werden. Hierdurch kann eine höhere Qualität des Templates erreicht werden, da längere Substrings des vorherigen Templates höher gewichtet werden.

Ein besonders effizienter Abgleich zwischen Substrings eines vorherigen Templates und Abschnitten einer neuen Protokollzeile kann, im Fall, dass mehrere Substrings des vorherigen Templates dieselbe Länge aufweisen, erzielt werden, wenn diejenigen Substrings des vorherigen Templates, die dieselbe Länge aufweisen, in einer vorgegebenen Verarbeitungsrichtung, insbesondere von links nach rechts, den Abschnitten in der jeweiligen Protokollzeile zugeordnet werden. Dadurch wird der der Umstand ausgenutzt, dass sich Protokollzeilen an bestimmten Stellen weniger unterscheiden, als allgemein an allen anderen Stellen.

Eine besonders effiziente Vorgehensweise zur Erstellung eines Templates kann bereitgestellt werden, wenn die Zuordnung verbleibender Substrings des vorherigen Templates, nur solange erfolgt, als noch Positionen zwischen und/oder benachbart zu denjenigen Substrings des vorherigen Templates, die bereits entsprechenden Abschnitten der Protokollzeile zugeordnet wurden, frei sind, insbesondere dass diejenigen Substrings der Protokollzeile, die nicht mehr zugeordnet werden können, nicht im Template berücksichtigt werden.

Ein Verfahren zur Erstellung eines weiteren Templates mit einer besonders hohen Qualität bzw. Repräsentativität für eine jeweilige Gruppe bei gleichzeitig besonders geringer Laufzeit kann bereitgestellt werden, wenn
- zunächst die Substrings des vorherigen Templates erfindungsgemäß den jeweils entsprechenden Abschnitten innerhalb der Protokollzeile zugeordnet werden, sofern diese in der jeweiligen Protokollzeile vorkommen, und
- anschließend diejenigen Substrings des vorherigen Templates, denen noch kein entsprechender Abschnitt in der jeweiligen Protokollzeile zugeordnet wurde, erfindungsgemäß zu einer konstanten Zeichenkette zusammengeführt und durch einen Abgleich den verbleibenden Abschnitten der Protokollzeile zugeordnet werden.

Eine derartige Vorgehensweise zur Erstellung eines weiteren Templates ist weiters besonders vorteilhaft, da derart erstellte Templates besonders wenig anfällig für schlechte Eingaben sind, da die Vorteile der unterschiedlichen Ansätze genutzt werden und so Defizite ausgeglichen werden.

Eine besonders zuverlässige Berücksichtung von Zwischenräumen zwischen Substrings kann bei der Erstellung von Templates erzielt werden, wenn bei der Erstellung eines weiteren Templates die Zwischenräume zwischen den Substrings des vorherigen Templates als Zwischenräume zwischen den Substrings des weiteren Templates erhalten bleiben, wobei insbesondere vorgesehen ist, dass vor der Erstellung eines weiteren Templates an den Positionen der Zwischenräume zwischen den Substrings des vorherigen Templates ein Marker gesetzt wird und an den Positionen des Markers im erstellten weiteren Template Zwischenräume eingefügt werden. Bei einem derartigen Marker kann es sich beispielsweise um verschiedene Zeichen handeln, die jeweils an der Position eines Zwischenraums eingefügt werden. Dadurch wird garantiert, dass auch alle vorherigen Protokollzeilen durch das neue Template beschrieben werden.

Eine weitere Vorgehensweise zur zuverlässigen Berücksichtigung von Zwischenräumen zwischen Substrings kann bei der Erstellung von Templates erzielt werden, wenn nach der Erstellung eines weiteren Templates überprüft wird, ob das erstellte weitere Template einer Obermenge des vorherigen Templates entspricht, und sofern dies nicht der Fall ist, variable Zwischenräume in das weitere Template eingefügt werden, sodass das weitere Template eine Obermenge des vorherigen Templates beschreibt.

Informationen über die Eigenschaften von Zwischenräumen zwischen Substrings können bei der Erstellung von Templates besonders einfach bereitgestellt werden, wenn während der Erstellung weiterer Templates basierend auf jeweils vorherigen Templates und Protokollzeilen einer jeweiligen Gruppe aus den weiteren Templates hervorgehende Eigenschaften der jeweiligen Gruppe ermittelt und zur Verfügung gehalten werden, wobei insbesondere vorgesehen ist, dass
- die Länge, insbesondere die minimale und/oder maximale Länge, der Zwischenräume zwischen den Substrings und/oder
- die Strings, die die Zwischenräume zwischen den Substrings füllen und/oder
- die Positionen der ersten Buchstaben eines jeweiligen Substrings
   ermittelt und zur Verfügung gehalten werden.
   Somit wird eine detailliertere Analyse ermöglicht.

Ein Programm zur Durchführung eines erfindungsgemäßen Verfahrens kann vorteilhafterweise auf einem Datenträger abgespeichert werden.

Weitere Vorteile und Ausgestaltungen der Erfindung ergeben sich aus der Beschreibung und den beiliegenden Zeichnungen.

Die Erfindung ist im Folgenden anhand von besonders vorteilhaften, aber nicht einschränkend zu verstehenden Ausführungsbeispielen in den Zeichnungen schematisch dargestellt und wird unter Bezugnahme auf die Zeichnungen beispielhaft beschrieben.

Im Folgenden zeigen schematisch:
Fig. 1 ein Ausführungsbeispiel für den Abgleich eines initialen Templates mit einer Protokollzeile,
Fig. 2 ein erstes Ausführungsbeispiel für die Erstellung eines Templates basierend auf einem vorherigen Template und einer Protokollzeile der zugehörigen Gruppe,
Fig. 3 ein zweites Ausführungsbeispiel für die Erstellung eines Templates,
Fig. 4 ein drittes Ausführungsbeispiel für die Erstellung eines Templates,
Fig. 5 ein viertes Ausführungsbeispiel für die Erstellung eines Templates,
Fig. 6 Beispiele zweier Protokollzeilen und eines Templates,
Fig. 7 ein Beispiel eines Computersystems.

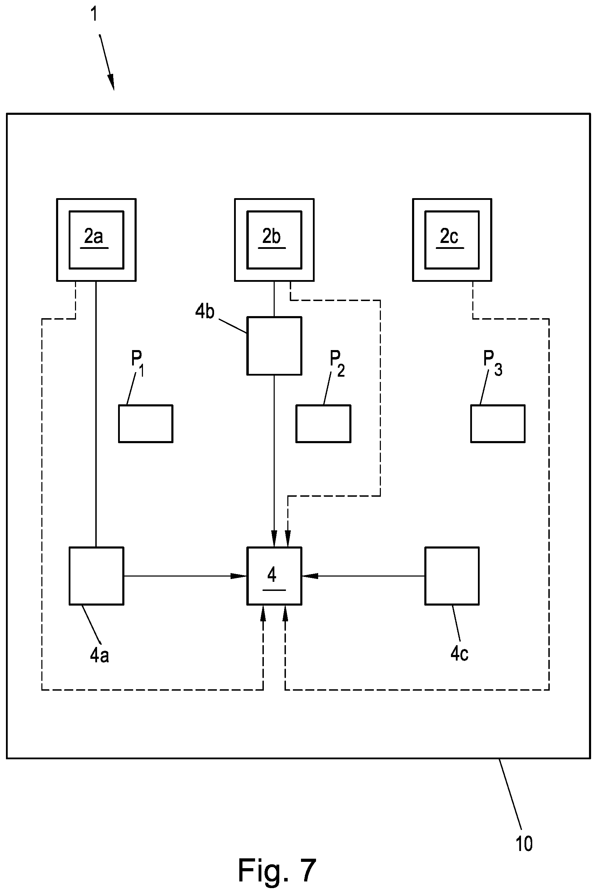

Fig. 7 zeigt schematisch ein Beispiel eines Computersystems 1, bei dem auf einem Computer 10 mehrere Prozesse 2a, 2b, 2c ablaufen. Die Prozesse 2a, 2b, 2c erstellen in einer Trainingsphase zunächst zu unterschiedlichen Zeitpunkten bei Auftreten vorgegebener Ereignisse für jedes dieser Ereignisse Protokolldatensätze in Form von als Protokollzeilen P bezeichneten Zeichenketten. Im Ausführungsbeispiel in Fig. 7 werden beispielsweise drei Protokollzeilen P₁, P₂, P₃ erstellt.

Die einzelnen Protokollzeilen P₁, P₂, P₃ können jeweils in Echtzeit weitergeleitet und zeitlich geordnet nach z.B. deren Erstellungszeitpunkt in eine zentrale Protokolldatei 4 geschrieben und/oder weiter verarbeitet werden. Alternativ dazu können die Protokollzeilen P₁, P₂, P₃ jeweils in einer dem jeweiligen Prozess 2a, 2b, 2c zugehörigen Protokolldatei 4a, 4b, 4c abgespeichert werden. In diesem Fall werden die einzelnen Protokollzeilen P₁, P₂, P₃ üblicherweise in der Reihenfolge ihres Erstellungszeitpunkts in die jeweilige Protokolldatei 4a, 4b, 4c geschrieben. Zu einem späteren Zeitpunkt können die einzelnen Protokolldatensätze der Protokolldateien 4a, 4b, 4c in eine gemeinsame zentrale Protokolldatei 4 geschrieben werden.

In der Trainingsphase werden anschließend die einzelnen Protokollzeilen P₁, P₂, P₃ der Protokolldateien 4a, 4b, 4c oder der gemeinsamen zentralen Protokolldatei 4 hinsichtlich ihrer Ähnlichkeit analysiert und aufgrund ihrer Ähnlichkeit nach einer vorgegebenen Metrik und unter Vorgabe eines Ähnlichkeits-Schwellenwerts zu Gruppen zusammengefasst. Je nach Art des gewählten Gruppierungs- bzw. Clustering-Verfahrens ist es möglich, dass einzelne Protokollzeilen P₁, P₂, P₃ mehreren Gruppen zugeordnet werden oder, dass eine Mehrfachzuordnung der einzelnen Protokollzeilen P₁, P₂, P₃ zu Clustern bzw. Gruppen unterbunden wird.

Aus dem Stand der Technik ist eine Vielzahl von Gruppierungs-Verfahren bekannt, die auf der Anwendung einer Distanzfunktion beruhen und ein Zusammenfassen einzelner Protokollzeilen zu Gruppen C₁, C₂ oder Gruppen von untereinander ähnlichen Protokollzeilen ermöglichen. Solche Gruppierungs-Verfahren sind beispielsweise *CLIQUE (*Agrawal, R., Gehrke, J., Gunopulos, D., & Raghavan, P. (1998). Automatic subspace clustering of high dimensional data for data mining applications (Vol. 27, No. 2, pp. 94-105). ACM*.), MAFIA (*Goil, S., Nagesh, H., & Choudhary, A. (1999, June). MAFIA: Efficient and scalable subspace clustering for very large data sets. In Proceedings of the 5th ACM SIGKDD International Conference on Knowledge Discovery and Data Mining (pp. 443-452). ACM*.), CACTUS (*Ganti, V., Gehrke, J., & Ramakrishnan, R. (1999, August). CACTUS-clustering categorical data using summaries. In Proceedings of the fifth ACM SIGKDD international conference on Knowledge discovery and data mining (pp. 73-83). ACM*.), PROCULUS (*Aggarwal, C. C., Wolf, J. L., Yu, P. S., Procopiuc, C., & Park, J. S. (1999, June). Fast algorithms for projected clustering. In ACM SIGMoD Record (Vol. 28, No. 2, pp. 61-72). ACM*.) und SLCT (*Vaarandi, R. (2003, October). A data clustering algorithm for mining patterns from event logs. In Proceedings of the 2003 IEEE Workshop on IP Operations and Management (IPOM) (pp. 119-126*)).*

Zur Charakterisierung des Betriebszustands des Computersystems 10 wird im Rahmen der Trainingsphase anschließend an die zuvor beschriebene Gruppierung von Protokollzeilen P₁, P₂, P₃ für jede der derart ermittelten Gruppen ein Template erstellt. Als Template wird im Zusammenhang mit der Erfindung eine Liste von konstanten Substrings verstanden, die in ihrer Reihenfolge in ausgewählten, vorzugsweise allen, Protokollzeilen P₁, P₂, P₃ einer jeweiligen Gruppe vorhanden sind, sodass das Template die Struktur der einer jeweiligen Gruppe zugeordneten Protokollzeilen P₁, P₂, P₃ beschreibt.

Für die Erstellung von Templates wird in der Trainingsphase zunächst die Ähnlichkeit zwischen Protokollzeilen P₁, P₂, P₃ nach einem Verfahren ermittelt, das vorzugsweise auf der Anwendung einer Distanzfunktion beruht, die die Ähnlichkeit zwischen zwei Protokollzeilen P₁, P₂, P₃ angibt. Beispielsweise kann als Distanzfunktion die Levenshtein-Distanz zweier Zeichenketten gewählt werden. Die Berechnung der Levenshtein-Distanz ist beispielsweise beschrieben in Levenshtein, Vladimir I. "Binary codes capable of correcting deletions, insertions, and reversals." Soviet physics doklady. Vol. 10. No. 8. 1966..

Eine derartige Distanzfunktion ist geeignet, Zeichenketten, d.h. Protokollzeilen P₁, P₂, P₃ unterschiedlicher Länge miteinander zu vergleichen und liefert ein Abstandsmaß für die Distanz zwischen den Zeichenketten. Derart wird eine einfache Quantifizierung der Unterschiedlichkeit oder Ähnlichkeit zweier Protokollzeilen P₁, P₂, P₃ ermöglicht. Andere derartige Maß- bzw. Distanzfunktionen, die für einen Vergleich von Protokollzeilen in Frage kommen, sind beispielsweise beschrieben in Wael H Gomaa and Aly A Fahmy. 2013. A survey of text similarity approaches. International Journal of Computer Applications 68, 13 (2013).

Auf Grundlage des derart ermittelten Maßwerts für die Ähnlichkeit zwischen jeweils zwei Protokollzeilen einer jeweiligen Gruppe werden anschließend diejenigen Substrings, die, gegebenenfalls unterbrochen durch unterschiedliche Zeichenketten, in den Protokollzeilen P; P₁, P₂, P₃ der Gruppe vorhanden sind, zu einem Template T, T* zusammengeführt. Am Ende der Trainingsphase liegt schließlich eine Anzahl von den jeweiligen Gruppen von Protokollzeilen P; P₁, P₂, P₃ zugeordneten Templates T, T* vor. Auf einige Ausführungsbeispiele für die Erstellung von Templates T, T* wird im Folgenden noch näher eingegangen.

Eine derartige Trainingsphase kann jederzeit erneut durchgeführt werden, beispielsweise wenn sich einer oder mehrere Prozesse 2a, 2b, 2c oder Prozessparameter des Computersystems 10 verändert haben. In diesem Fall werden die Protokollzeilen P; P₁, P₂, P₃ der Protokolldateien 4a, 4b, 4c oder der gemeinsamen zentralen Protokolldatei 4 nach einer vorgegebenen Metrik erneut hinsichtlich ihrer Ähnlichkeit analysiert und aufgrund ihrer Ähnlichkeit zu Gruppen zusammengefasst. Anschließend wird für jede der derart ermittelten Gruppen erneut ein charakteristisches Template T, T* erstellt.

Alternativ dazu können auch die bestehenden Gruppen erweitert und basierend darauf neue Templates gebildet werden. Wird während dieser Zeit einer Gruppe eine neue Protokollzeile zugeordnet, wird auch das Template angepasst. Lässt sich eine Protokollzeile keiner Gruppe zuordnen, wird eine neue Gruppe gebildet und am Ende der erweiterten Trainingsphase werden für alle neuen Gruppen jeweils Templates berechnet.

Da die einzelnen ermittelten Gruppen von Protokollzeilen P₁, P₂, P₃ und die den Gruppen zugeordneten Templates T, T* charakteristisch für den Betriebszustand des Computersystems sind, können durch eine Analyse der Gruppen bzw. der für die jeweiligen Gruppen repräsentativen Templates T, T* anomale Betriebszustände des Computersystems 10 detektiert werden.

Dazu wird zunächst eine Charakterisierung des Betriebszustands des Computersystems 10 mit der vorstehend beschriebenen Vorgehensweise durchgeführt, sodass am Ende einer Trainingsphase eine Anzahl von den jeweiligen Gruppen von Protokollzeilen P₁, P₂, P₃ zugeordneten Templates T, T* vorliegen.

Wird nun vom Computersystem eine neue Protokollzeile P erstellt, so wird überprüft, ob diese neue Protokollzeile P einem der bereits aufgefundenen Templates T* entspricht. Ist dies der Fall, wird die neue Protokollzeile P derjenigen Gruppe zugeordnet, die das Template T* repräsentiert. Im Fall, dass die neue Protokollzeile P keinem der aufgefundenen Templates T* entspricht, wird ein anomaler Betriebszustand des Computersystems 10 erkannt, da der Fall, dass die neue Protokollzeile P keiner der Gruppen zugeordnet werden kann, indiziert, dass ein bestimmtes Ereignis stattgefunden hat, das als Anomalie detektiert werden sollte.

Derartige Templates T, T*, die zur Charakterisierung des Betriebszustands eines Computersystems oder zur Detektion von anomalen Betriebszuständen eines Computersystems herangezogen werden können, können gemäß verschiedener Ausführungsvarianten eines erfindungsgemäßen Verfahrens zur Erstellung eines Templates T, T* auf Grundlage der einer jeweiligen Gruppe zugeordneten Protokollzeilen P erstellt werden.

Als Input für die Erstellung eines derartigen Templates T, T* wird beispielsweise eine zentrale Protokolldatei 4 mit Protokollzeilen P₁, P₂, P₃, die einzelnen Gruppen zugeordnet sind, herangezogen. Als Ergebnis liefert ein erfindungsgemäßen Verfahren zur Erstellung eines Templates T, T* beispielsweise eine Datei, in der die für die einzelnen Gruppen erstellten Templates T, T* gespeichert sind.

**Die folgende Tabelle 1 zeigt einen schematischen Ausschnitt aus einer zentralen Protokolldatei 4 deren einzelne Einträge Ausschnitte aus Protokollzeilen P₁, P₂, P₃ repräsentieren, die einer Gruppe zugeordnet sind.**

| Protokollzeile | Ausschnitt |
|---|---|
| P₁ | database-0.v3ls1316.d03.arc.local |
| P₂ | database-0.v3ls2547.d03.arc.local |
| P₃ | database-0.v3ls3494.d03.arc.local |

Grundsätzlich wird bei einem erfindungsgemäßen Verfahren in der Trainingsphase zur Erstellung eines weiteren Templates T* auf Grundlage der einer jeweiligen Gruppe zugeordneten Protokollzeilen zunächst ein initiales Template T vorgegeben oder ermittelt. Bei diesem initialen Template T kann es sich beispielsweise auch um die erste Protokollzeile P handeln, die einer jeweiligen Gruppe zugeordnet wird.

Alternativ zu dieser Vorgehensweise zur Bereitstellung eines initialen Templates T kann auch ein Abgleich zwischen zwei einer jeweiligen Gruppe zugeordneten Protokollzeilen P durchgeführt werden und das Ergebnis dieses Abgleichs als Grundlage für die Erstellung eines initialen Templates T erstellt wird.

Eine derartige Erstellung oder Vorgabe eines initialen Templates T kann bei allen Ausführungsformen eines erfindungsgemäßen Verfahrens zur Erstellung eines weiteren Templates T* basierend auf einem vorherigen bzw. initialen Template T und einer jeweiligen Protokollzeile P einer Gruppe zum Einsatz kommen.

Anschließend erfolgt ein Abgleich des initialen Templates T mit einer Protokollzeile P, vorzugsweise allen Protokollzeilen P, die der jeweiligen Gruppe zugeordnet wurden, und derart wird ein weiteres Template T* erstellt. Anschließend wird für ausgewählte, vorzugsweise alle, weiteren der jeweiligen Gruppe zugeordneten Protokollzeilen P einzeln ein Abgleich mit dem jeweiligen weiteren Template T* durchgeführt und derart jeweils ein neues weiteres Template T* erstellt.

Das weitere Template T* entspricht somit der Struktur der jeweiligen Protokollzeile P sowie der Struktur ausgewählter, insbesondere aller, zuvor abgeglichenen Protokollzeilen. Das jeweils zuletzt auf Grundlage ausgewählter, insbesondere aller, zum jeweiligen Zeitpunkt in der Gruppe vorhandenen Protokollzeilen erstellte weitere Template T* wird jeweils als für die gesamte Gruppe repräsentatives Template herangezogen.

Der Abgleich zwischen einer, einer jeweiligen Gruppe zugeordneten, Protokollzeile P und einem Template und auch der Abgleich zwischen zwei Protokollzeilen P zur Erstellung eines initialen Templates T wird dabei jeweils unter Heranziehung einer vorgegebenen String-Metrik durchgeführt, die es erlaubt, ein Alignment zwischen zwei Strings zu bilden, beispielsweise der zuvor bereits erwähnten Levenshtein-Distanz. Unter Alignment ist im Zusammenhang mit der Erfindung dabei zu verstehen, dass die Elemente eines untersuchten Strings aus einem Datensatz, z.B. einer Protokolldatei, einem anderen String zugeordnet werden, wobei auf Inklusionen, Exklusionen, Verschiebungen und Ersetzungen geachtet wird.

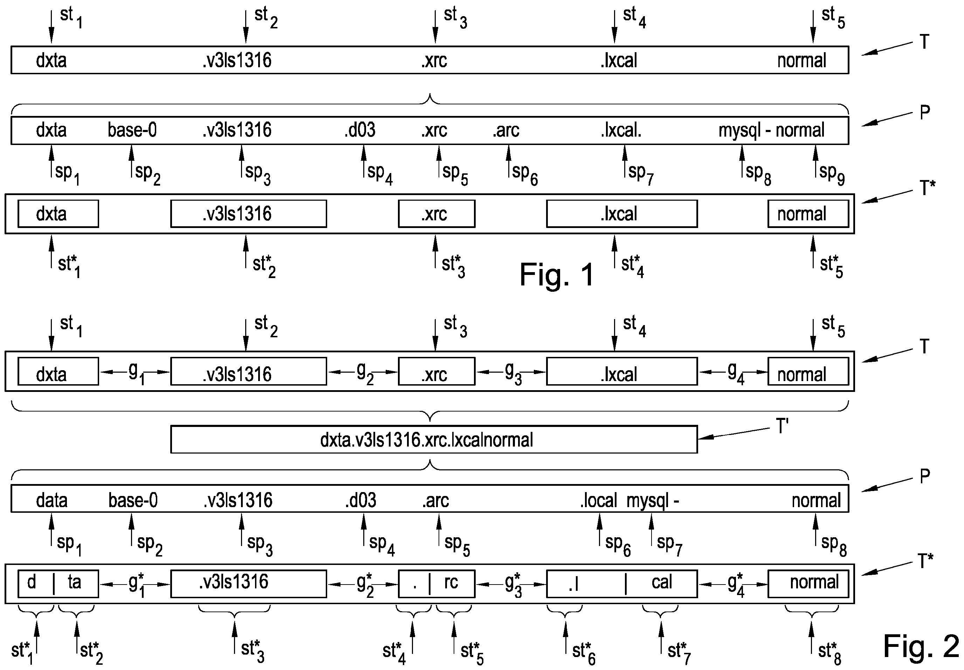

**Fig. 1** beschreibt diesen ersten Schritt eines erfindungsgemäßen Verfahrens zur Erstellung eines Templates, bei dem das initiale Template T mit einer Protokollzeile P der jeweiligen Gruppe verglichen wird. Im Ausführungsbeispiel in **Fig. 1** wird ein initiales Template T vorgegeben, das fünf Substrings st₁, ..., st₅ aufweist. Wie in **Fig. 1** durch die geschwungene Klammer angedeutet ist, wird das initiale Template T mit einer Protokollzeile P, die neun Abschnitte sp₁, ..., sp₉ aufweist abgeglichen.

Als Abschnitt einer Protokollzeile P wird im Zusammenhang mit der Erfindung ein nicht näher definierter Teilstring einer jeweiligen Protokollzeile P verstanden. Die Einteilung der Protokollzeilen P in Abschnitte sp₁, ..., spₙ in den Fig. 1 bis 6 dient nur der vereinfachten Erklärung der Erfindung.

Das Ergebnis dieses Abgleichs ist ein weiteres Template T*, das fünf Substrings st*₁, ..., st*₅ umfasst.

**Fig. 2** zeigt ein erstes Ausführungsbeispiel für die Erstellung eines Templates basierend auf einem vorherigen Template T und einer Protokollzeile P, die einer Gruppe zugeordnet wurde.

Zunächst werden dazu beispielsweise die in einer zentralen Protokolldatei 4 enthaltenen Protokollzeilen P, die verschiedenen Gruppen zugeordnet sind, eingelesen und anschließend gruppenweise abgearbeitet. Dazu wird, wie zuvor beschrieben, ein initiales Template T vorgegeben oder ermittelt. In **Fig. 2** handelt es sich beim initialen Template T um das Template, das durch den Abgleich der ersten beiden Protokollzeilen der jeweiligen Gruppe erzeugt wurde.

Anschließend wird für jede weitere Protokollzeile der jeweiligen Gruppe folgendes Verfahren durchgeführt: Zunächst werden alle Substrings st₁, ..., st₅ des initialen Templates T durch Entfernen der Zwischenräume g₁, ... , g₄ zwischen den Substrings st₁, ..., st₅ aus dem initialen Template T zu einer einzigen konstanten Zeichenkette T' zusammengefügt. Danach werden die konstante Zeichenkette T' und die jeweilige Protokollzeile P, mit der ein Abgleich erfolgen soll, unter Heranziehung einer geeigneten vorgegebenen String-Metrik, beispielsweise der Levenshtein-Distanz, verglichen und es wird ein Alignment gebildet.

Basierend auf dem Ergebnis dieses Abgleichs werden die Substrings st₁, ..., st₅ des initialen Templates T so weiter unterteilt, dass auch alle zusätzlichen Unterteilungen, die durch den Vergleich der konstanten Zeichenkette T' mit der jeweiligen Protokollzeile P entstanden sind, im weiteren Template T* enthalten sind.

**Fig. 2** beschreibt die Durchführung des Abgleichs zwischen einem jeweils vorherigen bzw. initialen Template T und einer jeweiligen Protokollzeile P unter Bildung einer konstanten Zeichenkette T' aus dem vorherigen bzw. initialen Template T. In **Fig. 2** repräsentiert die erste geschwungene Klammer, die zwischen dem vorherigen bzw. initialen Template T und der konstanten Zeichenkette T' angeordnet ist, das Zusammenführen der einzelnen Substrings st₁, ..., st₅ des vorherigen bzw. initialen Templates T zu einer konstanten Zeichenkette T'. Wie in **Fig. 2** ersichtlich ist, werden derart durch Entfernen der Zwischenräume g₁, ..., g₄ die fünf Substrings st₁, ..., st₅ des vorherigen Templates T zusammengeführt.

Die zweite geschwungene Klammer zwischen der konstanten Zeichenkette T' und der Protokollzeile P beschreibt das Matching mit der Protokollzeile P. Unter **Matching** ist im Zusammenhang mit der Erfindung zu verstehen, dass das zu einer konstanten Zeichenkette T' zusammengeführte vorherige bzw. initiale Template T, oder Teile des initialen oder vorherigen Templates T mit einer neuen Protokollzeile P verglichen werden.

Die Protokollzeile P umfasst im Ausführungsbeispiel acht Abschnitte sp₁, ..., sp₈.Durch den Vergleich der konstanten Zeichenkette T' mit der jeweiligen Protokollzeile P wird ein weiteres Template T* gebildet, das im Ausführungsbeispiel acht Substrings st*₁, ..., st*₈ und vier Zwischenräume g*₁, ..., g*₄ umfasst.

Wie in **Fig. 2** zu erkennen ist, sind die Substrings st₂ und st₅ des vorherigen Templates T unverändert als Substrings st*₃ und st*₈ im weiteren Template T* zu finden, während die Substrings st*₁, st*₂, st*₄, st*₅, st*₆ und st*₇ des weiteren Templates T* im Vergleich zu den Substrings st₁, st₃ und st₄ des vorherigen Templates T angepasst wurden, um die Abschnitte sp₁, sp₅ und sp₆ der Protokollzeile P entsprechend mit abzudecken. Die senkrechten Striche die die Substrings st*₁ und st*₂, st*₄ und st*₅ sowie st*₆ und st*₇ des weiteren Templates T* trennen, stellen die Unterteilungen dar, die im Vergleich zum vorherigen Template T verändert wurden.

Für die Abschnitte sp₂, sp₄ und sp₇ der Protokollzeile P wurden keine Entsprechungen mit dem vorherigen Template T ermittelt, sodass diese Substrings nicht im weiteren Template T* repräsentiert sind.

Wird anschließend eine weitere Protokollzeile P zur Gruppe hinzugefügt, wird diese mit dem weiteren Template T* abgeglichen und das weitere Template T* gegebenenfalls angepasst, um die hinzugekommene weitere Protokollzeile P mit abzudecken. Dies kann beispielsweise in der Trainingsphase oder einer erneuten Trainingsphase der Fall sein.

Eine Erstellung einer konstanten Zeichenkette T' ermöglicht einen effizienten Abgleich zwischen einem Template T und einer Protokollzeile P, da dadurch die Länge zumindest eines der beiden zu vergleichenden Strings bzw. Zeichenketten reduziert werden kann.

Da die Informationen über die Abstände zwischen den Substrings im Algorithmus jedoch nicht berücksichtigt werden, kann dies unter Umständen zu nicht perfekten Matchings führen. Derartige Sonderfälle treten wegen der vorausgesetzten Ähnlichkeit innerhalb einer Gruppe jedoch nur äußerst selten auf.

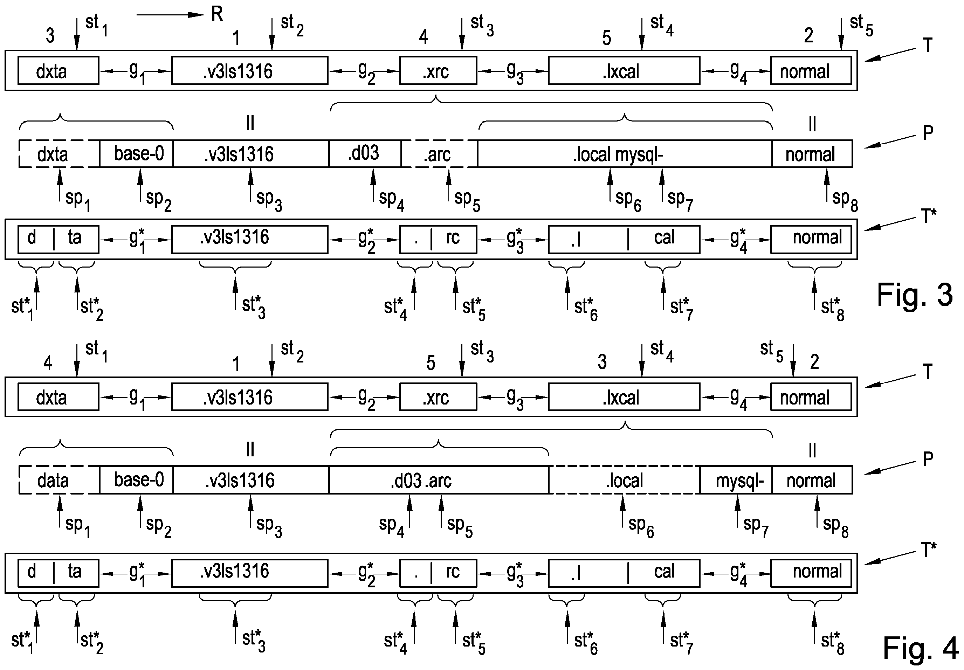

**Fig. 3** zeigt ein zweites Ausführungsbeispiel für die Erstellung eines Templates basierend auf einem vorherigen bzw. initialen Template T und einer Protokollzeile P, die einer Gruppe zugeordnet wurde.

Wie bereits zuvor beschrieben, wird zunächst ein vorheriges bzw. initiales Template T vorgegeben oder ermittelt. Das vorherige bzw. initiale Template T umfasst im Ausführungsbeispiel in **Fig. 3** vier Zwischenräume g₁, ..., g₄ sowie fünf Substrings st₁, ..., st₅ und soll mit einer Protokollzeile P, die acht Abschnitte sp₁, ..., sp₈ umfasst, abgeglichen werden.

Dazu werden in einer vorgegebenen Verarbeitungsrichtung R die Substrings st₁, ..., st₅ des vorherigen Templates T denjenigen Abschnitten sp₁, ..., sp₈ der Protokollzeile P zugeordnet, denen sie entsprechen, sofern die Substrings st₁, ..., st₅ des vorherigen Templates T in der Protokollzeile P vorkommen. Diese unmittelbare Zuordnung erfolgt durch einen einfachen Vergleich der betreffenden Substrings bzw. Abschnitte.

Als Verarbeitungsrichtung R ist in **Fig. 3** eine Verarbeitung von links nach rechts innerhalb eines Templates T vorgegeben. Alternativ dazu kann auch eine Verarbeitung von rechts nach links erfolgen.

Wie in **Fig. 3** ersichtlich ist, können die Substrings st₂ und st₅ im vorherigen bzw. inititalen Template T unmittelbar den Abschnitten sp₃ und sp₈ der Protokollzeile P zugeordnet werden und werden daher als erster bzw. zweiter Substring innerhalb des vorherigen Template T abgearbeitet und in das weitere Template T* übernommen.

Die Reihenfolge der Verarbeitung der Substrings st₁, ..., st₅ des vorherigen Templates T ist in **Fig. 3** mit Ziffern, die oberhalb der jeweiligen Substrings st₁, ..., st₅ angeordnet sind, angegeben. Vertikale Gleichzeichen und dick umrandete Abschnitte geben an, dass der betreffende Substring des vorherigen Templates T in der Protokollzeile P vorhanden ist.

Die Substrings st₁, st₃ und st₄ des vorherigen Templates T konnten nicht unmittelbar Abschnitten der Protokollzeile P zugeordnet werden. Daher wird in der vorgegebenen Verarbeitungsrichtung R, d.h. von links nach rechts, für diejenigen Substrings st₁, st₃ und st₄ des vorherigen Templates T, denen noch kein entsprechender Substring in der jeweiligen Protokollzeile P zugeordnet wurde, ein Abgleich mit den verbleibenden Abschnitten sp₁, sp₂, sp₄, sp₅, sp₆ und sp₇ der jeweiligen Protokollzeile P unter der vorgegebenen String-Metrik durchgeführt, d.h. in **Fig. 3** wird die Levenshtein-Distanz ermittelt.

Derart werden die verbleibenden Substrings st₁, st₃ und st₄ des vorherigen Templates T denjenigen verbleibenden Abschnitten sp₁, sp₂, sp₄, sp₅, sp₆ und sp₇ der Protokollzeile zugeordnet, denen sie entsprechen. Dabei erfolgt eine Zuordnung der verbleibenden Substrings st₁, st₃ und st₄ des vorherigen Templates T zu den verbleibenden Substrings sp₁, sp₂, sp₄, sp₅, sp₆ und sp₇ der Protokollzeile jeweils nur an Positionen zwischen und/oder benachbart zu den Substrings st₂ und st₅ des vorherigen Templates T, die bereits den entsprechenden Abschnitten sp₃ und sp₈ der Protokollzeile P zugeordnet wurden. Die Abfolge der Substrings st₁, ..., st₅ des vorherigen Templates T und die Abfolge der Abschnitte sp₁, ..., sp₈ der Protokollzeile P bleiben bei der Zuordnung unverändert.

Das bedeutet, dass beispielsweise der Substring st₁ des vorherigen Templates T nur zu Abschnitten der Protokollzeile P zugeordnet werden kann, die links von Abschnitt sp₃ liegen, der bereits Substring st₂ im vorherigen Template T zugeordnet wurde, oder, dass der Substring st₃ des vorherigen Templates T nur zu Abschnitten der Protokollzeile P zugeordnet werden kann, die zwischen den Abschnitten sp₃ und sp₈ liegen, die bereits den Substrings st₂ und st₅ im vorherigen Template T zugeordnet wurden.

Geschwungene Klammern geben an, welcher Substring mit welchem Ausschnitt der Protokollzeile P gematcht wird. Der gestrichelte Bereich in der Protokollzeile P gibt an, mit welchem Abschnitt die Substrings st₁ und st₃ des vorherigen Templates T gematcht wurde. In **Fig. 3** sind dies die Abschnitte sp₁ und sp₅ der Protokollzeile P. Damit verbleiben beispielsweise für Substring st₄ nur mehr die Abschnitte sp₆ und sp₇ für ein Matching.

Aus diesem Grund können auch Substrings aus dem Template T im weiteren Template T* nicht mehr vertreten sein, sollten für diese Substrings keine Abschnitte sp mehr in der Protokollzeile P für ein Matching übrig bleiben. Für die Abschnitte sp₂ und sp₄ der Protokollzeile P wurde keine Zuordnung im vorherigen Template T ermittelt.

Die verbleibenden Substrings st₁, st₃ und st₄ des vorherigen Templates T werden dabei mit Hilfe der Levenshtein-Distanz so verändert, dass sich ein weiteres Template T* ergibt, das auch die den verbleibenden Substrings st₁, st₃ und st₄ zugeordneten Abschnitte der Protokollzeile P abdeckt. Die senkrechten Striche zwischen den Substrings st*₁ und st*₂, st*₄ und st*₅ sowie st*₆ und st*₇ des weiteren Templates T* stellen die Unterteilungen dar, die im Vergleich zum vorherigen Template T verändert wurden.

Wird anschließend eine weitere Protokollzeile P zur Gruppe hinzugefügt, wird diese mit dem weiteren Template T* abgeglichen und das weitere Template T* gegebenenfalls angepasst, um die hinzugekommene weitere Protokollzeile P mit abzudecken.

Optional können auch nur diejenigen Substrings des vorherigen Templates T unmittelbar durch einen Vergleich Abschnitten der Protokollzeile P zugeordnet werden, die eine vorgegebene Mindestlänge bzw. Zeichenanzahl aufweisen, da die Qualität bzw. Repräsentativität eines weiteren Templates T* erhöht werden kann, wenn Substrings, die kürzer als eine vorgegebene Mindestlänge sind, bei der Zuordnung zunächst unberücksichtigt bleiben.

Erst nachdem eine unmittelbare Zuordnung derjenigen Substrings des vorherigen Templates T, die die vorgegebene Mindestlänge aufweisen, zu Abschnitten der Protokollzeile P erfolgt ist, werden auch diejenigen Substrings, denen entweder noch kein entsprechender Abschnitt in der Protokollzeile P zugeordnet werden konnte, oder die die vorgegebene Mindestlänge nicht aufweisen, auf die verbleibenden Abschnitte der Protokollzeile P, wie oben beschrieben, gematcht.

Es gilt prinzipiell je größer die Länge gewählt wird, desto höher ist die Qualität der weiteren Templates T*. Allerdings ist zu bedenken, dass bei einer zu groß gewählten Mindestlänge dieser Vorteil wieder verloren geht, da in diesem Fall unter Umständen gar keine Zuordnungen mehr stattfinden können. Empirisch gesehen kann der größte Unterschied in der Qualität des weiteren Templates T* zwischen den Mindestlängen 1 und 2 beobachtet werden. Alle anderen Längen liefern vergleichbar gute weitere Templates T*.

Eine derartige Vorgehensweise zur Erstellung eines weiteren Templates T* benötigt vorteilhafterweise eine vergleichsweise relativ geringe Laufzeit, da die Länge der Abschnitte der Zeilen, für die die vorgegebene String-Metrik angewendet bzw. die Levenshtein-Distanz berechnet wird, reduziert wird, indem die Substrings aus dem vorherigen Template T, welche in der jeweiligen Protokollzeile P als Substrings enthalten sind, einander zugeordnet werden und nur die nicht unmittelbar zugeordneten Substrings des vorherigen Templates T mit Ausschnitten aus der Protokollzeile P verglichen werden.

Für gewisse Gruppen von empirisch etwa 2% können jedoch Probleme auftreten, die dazu führen, dass nicht die optimalen weiteren Templates T* ausgegeben werden. Beispielsweise wird für ein vorheriges Template T = {LEN=62}, {ID=25} und eine Protokollzeile P = {LEN=60 ID=26436} folgendes weiteres Template T* ermittelt: {LEN=6}, {2}

In diesem Fall wird die Qualität des weiteren Templates T* im Vergleich zum vorherigen Template T verschlechtert, da das Zeichen "2" am Ende des ersten Substrings im vorherigen Template T mit dem Zeichen "2" am Ende der Protokollzeile P gematcht wird. Das hat zur Folge, dass der Substring "ID=25" aus dem vorherigen Template T entfernt wird, sobald die Übereinstimmung der beiden Substrings mithilfe der Levenshtein-Distanz bestimmt wird. Das ist problematisch, da auch der Substring "ID=25" ein Match erreicht hätte.

**Fig. 4** zeigt ein drittes Ausführungsbeispiel für die Erstellung eines weiteren Templates T* basierend auf einem vorherigen bzw. initalen Template T und einer Protokollzeile P, die einer Gruppe zugeordnet wurde.

Dabei wird zunächst wieder ein vorheriges bzw. initiales Template T vorgegeben oder auf die zuvor bereits beschriebe Weise ermittelt. Das vorherige bzw. initiale Template T umfasst im Ausführungsbeispiel in **Fig. 4** vier Zwischenräume g₁, ..., g₄ sowie fünf Substrings st₁, ..., st₅ und soll mit einer Protokollzeile P, die acht Abschnitte sp₁, ..., sp₈ umfasst, abgeglichen werden.

Anschließend werden die Substrings st₁, ..., st₅ des vorherigen Templates T hinsichtlich ihrer Länge untersucht und geordnet nach deren Länge, insbesondere beginnend beim längsten bis hin zum kürzesten Substring, den entsprechenden Abschnitten sp₁, ..., sp₈ innerhalb der Protokollzeile P unmittelbar zugeordnet, sofern diese in der jeweiligen Protokollzeile P vorkommen. Dies erfolgt analog zur im Zusammenhang mit **Fig. 3** beschriebenen Vorgehensweise. In Fig. 4 wird z.B. Substring st₂ des vorherigen Templates T aufgrund seiner Länge als erstes abgearbeitet, während der kürzeste Substring st₃ zuletzt abgearbeitet wird.

Dabei können optional zunächst auch nur Substrings st₁, ..., st₅ des vorherigen Templates T mit einer vorgegebenen Mindestlänge markiert bzw. den entsprechenden Abschnitten der Protokollzeile P zugeordnet werden, da Substrings, die eine vorgegebene Mindestlänge nicht überschreiten, die Erstellung eines optimalen weiteren Templates T* behindern können.

Sollten mehrere Substrings st₁, ..., st₅ des vorherigen Templates T dieselbe Länge aufweisen, können diese optional in einer vorgegebenen Verarbeitungsrichtung R, beispielsweise von links nach rechts oder umgekehrt, den Abschnitten sp₁, ..., sp₈ der jeweiligen Protokollzeile P zugeordnet werden.

Wie in **Fig. 4** ersichtlich ist, können die Substrings st₂ und st₅ im vorherigen bzw. inititalen Template T unmittelbar den Abschnitten sp₃ und sp₈ der Protokollzeile P zugeordnet werden und werden daher als erster bzw. zweiter Substring innerhalb des vorherigen Template T abgearbeitet und in das weitere Template T* übernommen. Die Reihenfolge der Verarbeitung der Substrings st₁, ..., st₅ des vorherigen Templates T ist in **Fig. 4** mit Ziffern, die oberhalb der jeweiligen Substrings st₁, ..., st₅ angeordnet sind, angegeben. Vertikale Gleichzeichen und dick umrandete Abschnitte geben an, dass der betreffende Substring des vorherigen Templates T in der Protokollzeile P vorhanden ist.

Optional können auch bei dem im Zusammenhang mit Fig. 4 dargestellten Verfahren nur diejenigen Substrings des vorherigen Templates T unmittelbar durch einen Vergleich Abschnitten der Protokollzeile P zugeordnet werden, die eine vorgegebene Mindestlänge bzw. Zeichenanzahl aufweisen. Wie zuvor bereits erläutert, kann die Qualität bzw. Repräsentativität eines weiteren Templates T* erhöht werden, wenn Substrings, die kürzer als eine vorgegebene Mindestlänge sind, bei der Zuordnung zunächst unberücksichtigt bleiben.

Erst nachdem eine unmittelbare Zuordnung derjenigen Substrings des vorherigen Templates T, die die vorgegebene Mindestlänge aufweisen, zu Abschnitten der Protokollzeile P erfolgt ist, werden auch diejenigen Substrings, denen entweder noch kein entsprechender Abschnitt in der Protokollzeile P zugeordnet werden konnte, oder die die vorgegebene Mindestlänge nicht aufweisen, auf die verbleibenden Abschnitte der Protokollzeile P, wie oben beschrieben, gematcht.

Es gilt prinzipiell je größer die Länge gewählt wird, desto höher ist die Qualität der weiteren Templates T*. Allerdings ist zu bedenken, dass bei einer zu groß gewählten Mindestlänge dieser Vorteil wieder verloren geht, da in diesem Fall unter Umständen gar keine Zuordnungen mehr stattfinden können. Empirisch gesehen kann der größte Unterschied in der Qualität des weiteren Templates T* zwischen den Mindestlängen 1 und 2 beobachtet werden. Alle anderen Längen liefern vergleichbar gute weitere Templates T*.

Eine derartige Vorgehensweise zur Erstellung eines weiteren Templates T* benötigt vorteilhafterweise eine vergleichsweise relativ geringe Laufzeit, da die Länge der Abschnitte der Zeilen, für die die vorgegebene String-Metrik angewendet bzw. die Levenshtein-Distanz berechnet wird, reduziert wird, indem die Substrings aus dem vorherigen Template T, welche in der jeweiligen Protokollzeile P als Substrings enthalten sind, einander zugeordnet werden und nur die nicht unmittelbar zugeordneten Substrings des vorherigen Templates T mit Ausschnitten aus der Protokollzeile P verglichen werden.

Die Substrings st₁, st₃ und st₄ des vorherigen Templates T konnten nicht unmittelbar Abschnitten der Protokollzeile P zugeordnet werden. Daher wird geordnet nach deren Länge für die Substrings st₁, st₃ und st₄ des vorherigen Templates T, beispielsweise beginnend beim längsten Substring st₄ bis hin zum kürzesten Substring st₃, und gegebenenfalls in der vorgegebenen Verarbeitungsrichtung R, sollten mehrere gleich lange Substrings im vorherigen Template T enthalten sein, die Levenshtein-Distanz zur den verbleibenden Abschnitten sp₁, sp₂, sp₄, sp₅, sp₆ und sp₇ der Protokollzeile P ermittelt.

Dabei erfolgt eine Zuordnung der verbleibenden Substrings st₁, st₃ und st₄ des vorherigen Templates T zu den verbleibenden Abschnitten sp₁, sp₂, sp₄, sp₅, sp₆ und sp₇ der Protokollzeile P jeweils nur an Positionen zwischen und/oder benachbart zu den Substrings st₂ und st₅ des vorherigen Templates T, die bereits den entsprechenden Abschnitten sp₃ und sp₈ der Protokollzeile P zugeordnet wurden. Die Zuordnung erfolgt nur innerhalb des passenden Ausschnitts der jeweiligen Protokollzeile P, damit keine Permutationen auftreten. Die Abfolge der Substrings st₁, ..., st₅ des vorherigen Templates T und die Abfolge der Abschnitte sp₁, ..., sp₈ der Protokollzeile P bleiben bei der Zuordnung unverändert.

Geschwungene Klammern geben an, welcher Substring mit welchem Abschnitt der Protokollzeile P gematcht wird. Der gestrichelte Bereich in der Protokollzeile P gibt an, mit welchem Abschnitt die Substrings st₁ und st₄ des vorherigen Templates T gematcht wurden. In **Fig. 4** sind dies die Abschnitte sp₁ und sp₆ der Protokollzeile P. Für die Abschnitte sp₂ und sp₇ der Protokollzeile P wurde keine Zuordnung im vorherigen Template T ermittelt.

Die derart zugeordneten Substrings st₁, ..., st₅ des vorherigen Templates T werden mit Hilfe der Levenshtein-Distanz so verändert, dass sich ein weiteres Template T* ergibt, das auch diese Ausschnitte der Protokollzeile P abdeckt.

Wird anschließend eine weitere Protokollzeile P zur Gruppe hinzugefügt, wird diese mit dem weiteren Template T* abgeglichen und das weitere Template T* gegebenenfalls angepasst, um die hinzugekommene weitere Protokollzeile P mit abzudecken, was beispielsweise in der Trainingsphase oder einer erneuten Trainingsphase erfolgen kann.

Im Vergleich zu einer sequenziellen Verarbeitung der Substrings, wie dies im Zusammenhang mit **Fig. 3** dargestellt wurde, liefert diese Vorgehensweise weitere Templates T* mit einer verbesserten Qualität. Diese Verbesserung ist dadurch bedingt, dass die Substrings st₁, ..., st₅ des vorherigen Templates T, welche in der betrachteten Protokollzeile P als Abschnitte enthalten sind, nicht der Reihe nach, z.B. von links nach rechts, sondern geordnet nach ihrer Länge, zugeordnet werden. Nur Substrings derselben Länge werden in einer vorgegebenen Verarbeitungsrichtung R abgearbeitet. Weiters wird dieselbe Reihenfolge für die nicht vorkommenden Substrings implementiert.

Das Problem einer falschen Zuordnung kann in Ausnahmefällen weiterhin bestehen, falls ein Substring des vorherigen Templates T Zeichen enthält, welche verworfen werden sollten, jedoch in der neuen Protokollzeile P vorkommen: Beispielsweise wird für ein vorheriges Template T = {LEN=62}, {ID=25} und eine Protokollzeile P = {LEN=60 ID=26436} folgendes Template T* ermittelt: {LEN=6},{2}..

In diesem Fall wird, wie auch bereits im Zusammenhang mit Fig. 3 beschrieben, die Qualität des weiteren Templates T* im Vergleich zum vorherigen Template T verschlechtert, da das Zeichen "2" am Ende des ersten Substrings im vorherigen Template T mit dem Zeichen "2" am Ende der Protokollzeile P gematcht wird. Das hat zur Folge, dass der Substring "ID=25" aus dem vorherigen Template T entfernt wird, sobald die Übereinstimmung der beiden Substrings mithilfe der Levenshtein-Distanz bestimmt wird. Das ist problematisch, da auch der Substring "ID=25" ein Match erreicht hätte.

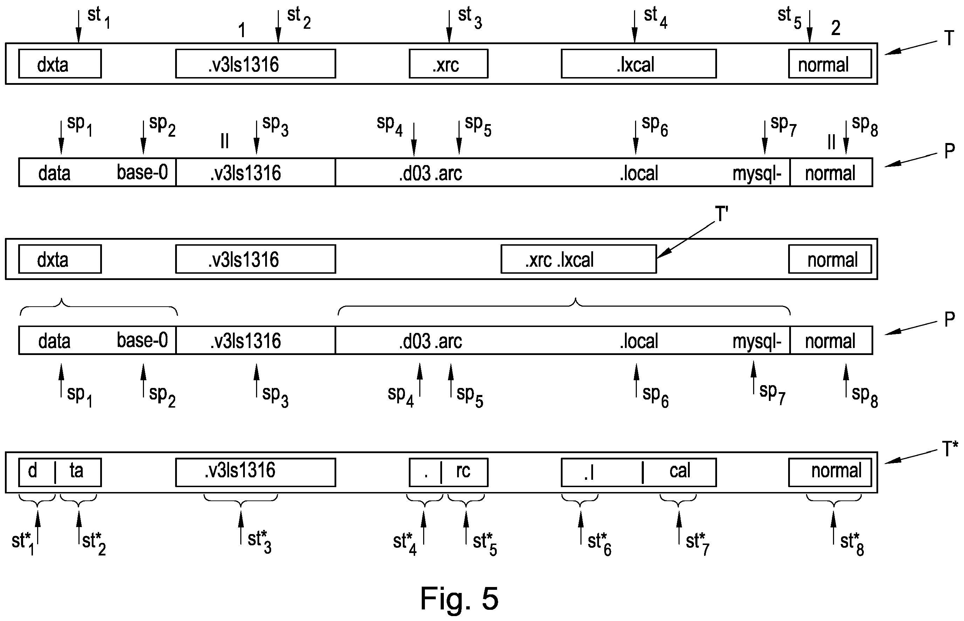

**Fig. 5** zeigt ein viertes Ausführungsbeispiel für die Erstellung eines weiteren Templates T* basierend auf einem vorherigen bzw. initialen Template T und einer Protokollzeile P, die einer Gruppe zugeordnet wurde.

Dabei wird zunächst wieder ein vorheriges bzw. initiales Template T vorgegeben oder auf die zuvor bereits beschriebe Weise ermittelt. Das vorherige bzw. initiale Template T umfasst im Ausführungsbeispiel in **Fig. 5** vier Zwischenräume g₁, ..., g₄ sowie fünf Substrings st₁, ..., st₅ und soll mit einer Protokollzeile P, die acht Abschnitte sp₁, ..., sp₈ umfasst, abgeglichen werden.

Dazu werden anschließend die Substrings st₁, ..., st₅ des vorherigen Templates T in einer vorgegebenen Verarbeitungsrichtung R, wie dies im Zusammenhang mit **Fig. 3** beschrieben wurde, oder z.B. absteigend nach deren Länge, wie dies im Zusammenhang mit **Fig. 4** beschrieben wurde, denjenigen Abschnitten sp₁, ..., sp₈ der Protokollzeile P unmittelbar zugeordnet, denen sie entsprechen, sofern die Substrings st₁, ..., st₅ des vorherigen Templates T in der Protokollzeile P vorkommen.

Wie in **Fig.** 5 ersichtlich ist, können die Substrings st₂ und st₅ im vorherigen bzw. inititalen Template T unmittelbar den Abschnitten sp₃ und sp₈ der Protokollzeile P zugeordnet werden und werden in das weitere Template T* übernommen. Vertikale Gleichzeichen und dick umrandete Abschnitte geben an, dass der betreffende Substring des vorherigen Templates T in der Protokollzeile P vorhanden ist.

Sollten eine Verarbeitung nach der Länge vorgenommen werden und mehrere Substrings st₁, ..., st₅ des vorherigen Templates T dieselbe Länge aufweisen, können diese optional in einer vorgegebenen Verarbeitungsrichtung R, beispielsweise von links nach rechts, den Abschnitten sp₁, ..., sp₈ der jeweiligen Protokollzeile P zugeordnet werden. Optional können zunächst auch nur Abschnitte sp₁, ..., sp₈ der Protokollzeile P mit einer vorgegebenen Mindestlänge zugeordnet werden.

Diejenigen Substrings st₁, ..., st₅ des vorherigen Templates T, die auf diese Weise noch keinem Abschnitt sp₁, ..., sp₈ der Protokollzeile P zugeordnet wurden, und die sich zwischen zwei bereits zugeordneten Substrings st₁, ..., st₅ des vorherigen Templates T befinden, werden zu einer einzigen konstanten Zeichenkette T' zusammengeführt. Dies geschieht, wie im Zusammenhang mit **Fig. 2** erläutert, durch Löschen der Zwischenräume zwischen den betreffenden Substrings.

In **Fig. 5** konnten die Substrings st₁, st₃ und st₄ des vorherigen Templates T nicht unmittelbar Abschnitten der Protokollzeile P zugeordnet werden. Daher werden die Substrings st₃ und st₄ des vorherigen Templates T, die sich zwischen den bereits zugeordneten Substrings st₂ und st₅ befinden, zu einer einzigen konstanten Zeichenkette T' zusammengeführt und mit dem passenden Ausschnitt aus der Protokollzeile P abgeglichen. Als passender Ausschnitt wird in diesem Zusammenhang derjenige Ausschnitt aus der Protokollzeile P verstanden, der sich zwischen denjenigen Abschnitten sp₃, sp₈ der Protokollzeile P befindet, die bereits den Substrings st₂, st₅ des vorherigen Templates T zugeordnet wurden. Der Abgleich erfolgt dabei auf dieselbe Weise, wie dies im Zusammenhang mit **Fig. 2** bereits erläutert wurde.

Geschwungene Klammern geben an, welcher Substring mit welchem Ausschnitt der Protokollzeile P gematcht wird. In **Fig. 5** werden die Abschnitte sp₁ und sp₂ der Protokollzeile P den Substrings st₁ des vorherigen Templates T und den Abschnitten sp₄ bis sp₇ der Protokollzeile P der konstanten Zeichenkette T' zugeordnet.

Als Ergebnis dieses Verfahrens ergibt sich wieder ein weiteres Template T*, bei dem die senkrechten Striche zwischen den Substrings st*₁ und st*₂, st*4 und st*₅ sowie st*₆ und st*₇ des weiteren Templates T* (siehe **Fig. 5**) die neuen Unterteilungen darstellen, die im Vergleich zum vorherigen Template T verändert wurden, um die Abschnitte der Protokollzeile P abzudecken.

Wird anschließend eine weitere Protokollzeile P beispielsweise in der Trainingsphase oder einer erneuten Trainingsphase zur Gruppe hinzugefügt, wird diese mit dem weiteren Template T* abgeglichen und das weitere Template T* gegebenenfalls angepasst, um die hinzugekommene weitere Protokollzeile P mit abzudecken.

Vorteil einer derartigen Vorgehensweise ist, dass durch das Zusammenführen von verbleibenden Substrings st₁, ..., st₅ des vorherigen Templates T, die nicht unmittelbar einem Abschnitt sp₁, ..., sp₈ der Protokollzeile P zugeordnet werden, zu einer einzigen konstanten Zeichenkette T', das weitere Templates T* eine vergleichsweise höhere Qualität aufweist und die einzelnen Abschnitte der Protokollzeilen P besser abdeckt, als bei einem Abgleich rein nach der einer vorgegebenen Verarbeitungsrichtung oder der Länge der Substrings nach. Gleichzeitig wird eine verkürzte Laufzeit im Vergleich zur Erstellung einer einzigen konstanten Zeichenkette T' allein und einem anschließenden Vergleich mit der Protokollzeile P erzielt.

Diese Vorgehensweise ist robust gegenüber den oben genannten schlechten Eingaben, als ein Abgleich rein nach einer vorgegebenen Verarbeitungsrichtung oder der Länge der Substrings nach. Durch das vorherige unmittelbare Zuordnen derjenigen Substrings st₁, ..., st₅ des vorherigen Templates T, die als Abschnitte sp₁, ..., sp₈ in der Protokollzeile P vorkommen, kann es in äußerst seltenen Fällen noch zu schlechten Matchings kommen, was jedoch durch das vorherige Gruppieren der Protokollzeilen P weitestgehend vermieden wird.

Grundsätzlich ist der Output aller zuvor beschriebenen erfindungsgemäßen Vorgangsweisen abhängig von der Reihenfolge der Inputs. Diese Abhängigkeit ist allerdings nicht signifikant und von den Daten und angewendeten Algorithmen abhängig. Die festzustellenden Unterschiede in der Qualität der Templates und der Laufzeit sind so gering, dass sie einen zu vernachlässigenden Einfluss haben.

Der Verarbeitungsaufwand von String-Metriken wie der Levenshtein-Distanz weist grundsätzlich eine quadratische Zunahme in Abhängigkeit von der Länge der zu vergleichenden Protokollzeile P auf. Um ein Template T, T* für eine Gruppe an Protokollzeilen P berechnen zu können, ist es erforderlich, jede Protokollzeile mit jeder anderen zu vergleichen, was zu einer Anzahl von (n-1)²/2 Rechenoperationen führt und daher sehr ineffizient ist. Vorteil aller zuvor beschriebenen Ausführungsformen eines erfindungsgemäßen Verfahrens ist daher, dass sich durch das inkrementelle Vorgehen der beschriebenen Ansätze die Anzahl der durchzuführenden Rechenoperationen auf n reduzieren lässt. Außerdem führen die zuvor beschriebenen Ausführungsformen eines erfindungsgemäßen Verfahrens dazu, dass kürzere Zeichenketten miteinander verglichen werden, wodurch die Rechenzeit und der Rechenaufwand noch weiter verringert werden.

Optional ist bei allen Ausführungsformen eines erfindungsgemäßen Verfahrens möglich, dass bei der Erstellung eines weiteren Templates T* die Zwischenräume g₁, ..., g₄ zwischen den Substrings st₁, ..., st₅ des vorherigen Templates T als Zwischenräume g*₁, ..., g*4 zwischen den Substrings des weiteren Templates T* erhalten bleiben. Dazu kann beispielsweise vor der Erstellung eines weiteren Templates T* an den Positionen der Zwischenräume zwischen den Substrings des vorherigen Templates T ein Marker gesetzt wird und an den Positionen des Markers im erstellten weiteren Template T* Zwischenräume eingefügt werden.

Alternativ dazu ist optional möglich, dass nach der Erstellung eines weiteren Templates T* überprüft wird, ob das erstellte weitere Template T* einer Untermenge des vorherigen Templates T entspricht, und sofern dies nicht der Fall ist, variable Zwischenräume in das weitere Template T* eingefügt werden, sodass das weitere Template T* eine Obermenge des vorherigen Templates T beschreibt.

Weiters ist bei allen Ausführungsformen eines erfindungsgemäßen Verfahrens möglich, dass während der Erstellung weiterer Templates T* basierend auf jeweils vorherigen bzw. initialen Templates T und Protokollzeilen P einer jeweiligen Gruppe aus den weiteren Templates T* hervorgehende Eigenschaften der jeweiligen Gruppe ermittelt und zur Verfügung gehalten werden. Dabei kann es sich beispielsweise um folgende Informationen handeln:
- die Länge, insbesondere die minimale und/oder maximale Länge, der Zwischenräume zwischen den Substrings und/oder
- die Strings, die die Zwischenräume zwischen den Substrings füllen und/oder
- die Positionen der ersten Buchstaben eines jeweiligen Substrings.

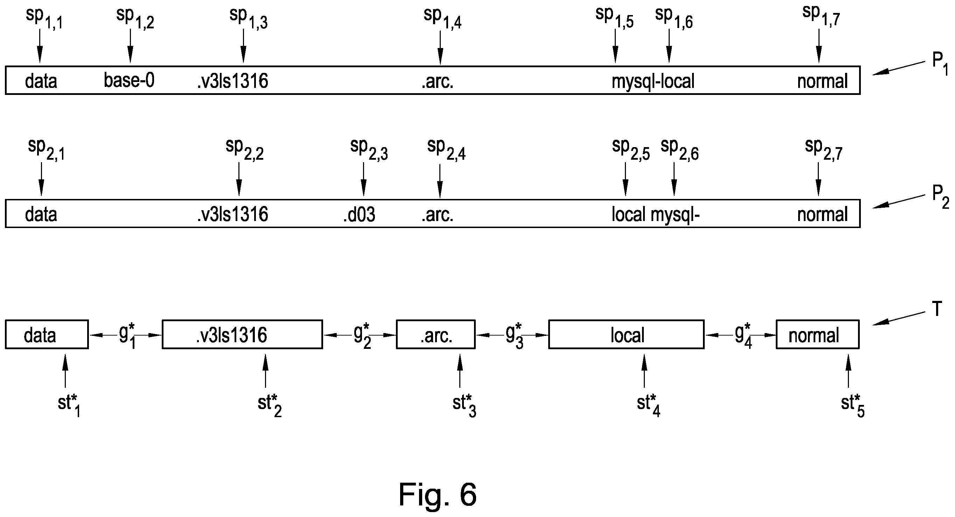

Diese Vorgehensweise wird im Folgenden anhand von **Fig. 6** näher erläutert. In **Fig. 6** sind zwei Protokollzeilen P₁, P₂ und ein Template T dargestellt. In diesem Fall können folgende Informationen abgeleitet werden:
- Eine Stringlist, welche dem Template entspricht, d.h. eine Liste der Strings, die in allen Protokollzeilen P₁, P₂ vorkommen, = ["data", ".v3ls1316", ".arc", "local", "normal"],
- Eine Gaplist, d.h. eine Liste für jeden Zwischenraum, in der die Abstände zwischen den jeweiligen Substrings in den einzelnen Protokollzeilen eingetragen sind, = [[0, 0], [6, 0], [0, 4], [7, 1], [0, 7]],
- Eine Minmaxlist, d.h. eine Liste in der die minimale und/oder maximale Länge der Zwischenräume eingetragen ist, = [[0, 0], [0, 6], [0, 4], [1, 7], [0, 7]],
- Stringpos, d.h. eine Liste der Positionen der ersten Buchstaben eines jeweiligen Substrings, = [0, 4, 13, 17, 22],
- Eine Gapstringlist, d.h. eine Liste der Strings, die die Zwischenräume zwischen den Substrings füllen, = [[,base-0', ,'], [.d03, ,'], [,mysql-" ,'], [,mysql-', "]].

## Patentansprüche

1. Verfahren zur Charakterisierung des Betriebszustands eines Computersystems (1), wobei in einer Trainingsphase
- von dem Computersystem (1) während des Betriebs des Computersystems (1) Protokolle erstellt werden, indem von dem Computersystem (1) bei Auftreten vorgegebener Ereignisse für jedes dieser Ereignisse jeweils ein Protokolldatensatz in Form einer Protokollzeile (P; P₁, P₂, P₃) erstellt wird,
- die Protokollzeilen (P; P₁, P₂, P₃) nach einer vorgegebenen Metrik hinsichtlich ihrer Ähnlichkeit analysiert werden und aufgrund ihrer Ähnlichkeit zu Gruppen zusammengefasst werden,
- für jede der derart ermittelten Gruppen ein Template (T, T*) erstellt wird,
wobei das Template (T, T*) die Struktur der einer jeweiligen Gruppe zugeordneten Protokollzeilen (P; P₁, P₂, P₃) beschreibt, insbesondere jeweils eine Liste von konstanten Substrings, gegebenenfalls unterbrochen durch unterschiedliche Zeichenketten, angibt, die in ihrer Reihenfolge in ausgewählten, insbesondere allen, Protokollzeilen (P; P₁, P₂, P₃) einer jeweiligen Gruppe vorhanden sind, und
- die einzelnen ermittelten Gruppen von Protokollzeilen (P; P₁, P₂, P₃) und die den Gruppen zugeordneten Templates (T, T*) charakteristisch für den Betriebszustand des Computersystems (1) sind.

2. Verfahren zur Detektion von anomalen Betriebszuständen eines Computersystems (1),
- wobei eine Charakterisierung des Betriebszustands des Computersystems (1) gemäß Anspruch 1 durchgeführt wird, sodass nach der Trainingsphase eine Anzahl von den jeweiligen Gruppen von Protokollzeilen (P; P₁, P₂, P₃) zugeordneten Templates (T, T*) vorliegen,
- wobei vom Computersystem eine neue Protokollzeile (P) erstellt wird,
- wobei überprüft wird, ob diese neue Protokollzeile (P) einem der bereits aufgefundenen Templates (T, T*) entspricht, und
- wobei im Fall, dass die neue Protokollzeile (P) keinem der aufgefundenen Templates (T, T*) entspricht, ein anomaler Betriebszustand des Computersystems (1) erkannt wird.

3. Verfahren nach Anspruch 1 oder 2, **dadurch gekennzeichnet, dass** in einer erneuten Trainingsphase
- die Protokollzeilen (P; P₁, P₂, P₃) nach einer vorgegebenen Metrik erneut hinsichtlich ihrer Ähnlichkeit analysiert und aufgrund ihrer Ähnlichkeit zu Gruppen zusammengefasst werden und für jede der derart ermittelten Gruppen erneut ein Template (T, T*) erstellt wird, oder
- die zuvor vorliegenden Gruppen um neu hinzugekommene Protokollzeilen (P; P₁, P₂, P₃) erweitert werden und im Fall, dass einer zuvor vorliegenden Gruppe eine neue Protokollzeile (P; P₁, P₂, P₃) zugeordnet wird, das Template (T, T*) der jeweiligen Gruppe erneut angepasst wird, und
- wobei insbesondere vorgesehen ist, dass im Fall, dass eine neue Protokollzeile (P) als keinem der zuvor aufgefundenen Templates (T, T*) entsprechend erkannt wurde, in der erneuten Trainingsphase eine neue Gruppe enthaltend die neue Protokollzeile (P) erstellt wird und ein Template (T, T*) für die jeweilige neue Gruppe berechnet wird.

4. Verfahren nach einem der Ansprüche 1 bis 3, wobei zur Erstellung eines Templates (T*) auf Grundlage der einer jeweiligen Gruppe zugeordneten Protokollzeilen (P; P₁, P₂, P₃)
- ein initiales Template (T) vorgegeben wird, insbesondere eine erste Protokollzeile (P; P₁, P₂, P₃) einer jeweiligen Gruppe als initiales Template (T) vorgegeben wird, und
- für ausgewählte, vorzugsweise alle weiteren, der jeweiligen Gruppe zugeordneten Protokollzeilen (P; P₁, P₂, P₃)
- ein Abgleich der jeweiligen Protokollzeile (P) mit dem jeweiligen Template (T) durchgeführt und jeweils ein weiteres Templates (T*) erstellt wird, wobei das weitere Template (T*) der Struktur der jeweiligen Protokollzeile (P) sowie der Struktur ausgewählter, insbesondere aller, zuvor abgeglichenen Protokollzeilen (P; P₁, P₂, P₃) entspricht, und
- das jeweils zuletzt auf Grundlage ausgewählter, insbesondere aller, zum jeweiligen Zeitpunkt in der Gruppe vorhandenen Protokollzeilen (P; P₁, P₂, P₃) erstellte weitere Template (T*) als jeweils für die gesamte Gruppe repräsentatives Template (T*) herangezogen wird, und
- der Abgleich zwischen einer, einer jeweiligen Gruppe zugeordneten, Protokollzeile (P) und dem initialen Template (T) und/oder einem weiteren Template (T*) unter Heranziehung einer vorgegebenen String-Metrik, insbesondere der Levenshtein-Distanz, durchgeführt wird.

5. Verfahren nach Anspruch 4, **dadurch gekennzeichnet, dass** zur Erstellung eines initialen Templates (T) ein Abgleich zwischen zwei einer jeweiligen Gruppe zugeordneten Protokollzeilen (P; P₁, P₂, P₃) durchgeführt wird, wobei der Abgleich unter Heranziehung einer vorgegebenen String-Metrik, insbesondere der Levenshtein-Distanz, durchgeführt wird.

6. Verfahren nach Anspruch 4 oder 5, **dadurch gekennzeichnet, dass** das Template (T*) jeweils
- eine Liste von konstanten Substrings (st*₁, ..., st*₅), gegebenenfalls unterbrochen durch unterschiedliche Zeichenketten, umfasst, die in ihrer Reihenfolge in ausgewählten, insbesondere allen, zuvor abgeglichenen Protokollzeilen (P; P₁, P₂, P₃) einer jeweiligen Gruppe vorhanden sind, sowie
- gegebenenfalls Information über den Inhalt der Zwischenräume (g*₁, ..., g*4) zwischen den Substrings (st*₁, ..., st*₅) umfasst.

7. Verfahren nach einem der Ansprüche 4 bis 6, **dadurch gekennzeichnet, dass** zur Erstellung des Templates (T*) basierend auf einem vorherigen oder initialen Template (T) und einer jeweiligen Protokollzeile (P) einer Gruppe,
- eine konstante Zeichenkette (T') aus dem vorherigen Template (T) durch Löschen der Zwischenräume (g₁, ..., g₄) zwischen den Substrings (st₁, ..., st₅) gebildet wird, und
- ein Abgleich zwischen einer jeweils neuen Protokollzeile (P) und der konstanten Zeichenkette (T') unter Anwendung einer vorgegebenen String-Metrik, insbesondere der Levenshtein-Distanz, durchgeführt wird und ein weiteres Template (T*) erstellt wird.

8. Verfahren nach Anspruch 6, **dadurch gekennzeichnet, dass** zur Erstellung eines weiteren Templates (T*) basierend auf einem vorherigen oder initialen Template (T) und einer jeweiligen Protokollzeile (P) einer Gruppe,
- zunächst in einer vorgegebenen Verarbeitungsrichtung (R), insbesondere von links nach rechts, die Substrings (st₁, ..., st₅) des vorherigen Templates (T) den jeweils entsprechenden Abschnitten (sp₁, ..., sp₈) innerhalb der Protokollzeile (P) zugeordnet werden, sofern diese in der jeweiligen Protokollzeile (P) vorkommen,
- anschließend in der vorgegebenen Verarbeitungsrichtung (R) für diejenigen Substrings (st₁, ..., st₅) des vorherigen Templates (T), denen noch kein entsprechender Abschnitt (sp₁, ..., sp₈) in der jeweiligen Protokollzeile (P) zugeordnet wurde,
- ein Abgleich mit den verbleibenden Abschnitten (sp₁, ..., sp₈) der jeweiligen Protokollzeile (P) unter Anwendung einer vorgegebenen String-Metrik durchgeführt wird, insbesondere die Levenshtein-Distanz ermittelt wird, und
- die verbleibenden Substrings (st₁, ..., st₅) des vorherigen Templates (T) derart denjenigen verbleibenden Abschnitten (sp₁, ..., sp₈) der Protokollzeile (P) zugeordnet werden, denen sie entsprechen,
- wobei die Zuordnung von verbleibenden Substrings (st₁, ..., st₅) des vorherigen Templates (T) zu verbleibenden Abschnitten (sp₁, ..., sp₈) der Protokollzeile (P) jeweils nur an Positionen zwischen und/oder benachbart zu denjenigen Abschnitten (sp₁, ..., sp₈) der Protokollzeile (P) erfolgt, die bereits entsprechenden Substrings (st₁, ..., st₅) des vorherigen Templates (T) zugeordnet wurden und
- wobei die Abfolge der Substrings (st₁, ..., st₅) des vorherigen Templates (T) und die Abfolge der Abschnitte (sp₁, ..., sp₈) der Protokollzeile (P) bei der Zuordnung jeweils unverändert bleiben.

9. Verfahren nach Anspruch 6, **dadurch gekennzeichnet, dass** zur Erstellung eines weiteren Templates (T*) basierend auf einem vorherigen oder initialen Template (T) und einer jeweiligen Protokollzeile (P) einer Gruppe,
- zunächst die Substrings (st₁, ..., st₅) des vorherigen Templates (T) hinsichtlich ihrer Länge untersucht werden und geordnet nach deren Länge, insbesondere beginnend beim längsten bis hin zum kürzesten Substring, den entsprechenden Abschnitten (sp₁, ..., sp₈) innerhalb der Protokollzeile (P) zugeordnet werden, sofern diese in der jeweiligen Protokollzeile (P) vorkommen, und
- anschließend für diejenigen Substrings (st₁, ..., st₅) des vorherigen Templates (T), denen noch kein entsprechender Abschnitt (sp₁, ..., sp₈) in der jeweiligen Protokollzeile (P) zugeordnet wurde, geordnet nach deren Länge, insbesondere beginnend beim längsten bis hin zum kürzesten Substring (st₁, ..., st₅),
- ein Abgleich mit den verbleibenden Abschnitten (sp₁, ..., sp₈) der jeweiligen Protokollzeile (P) unter Anwendung einer vorgegebenen String-Metrik durchgeführt wird, insbesondere die Levenshtein-Distanz ermittelt wird, und
- die verbleibenden Substrings (st₁, ..., st₅) des vorherigen Templates (T) derart denjenigen verbleibenden Abschnitten (sp₁, ..., sp₈) der Protokollzeile (P) zugeordnet werden, denen sie entsprechen,
- wobei die Zuordnung von verbleibenden Substrings (st₁, ..., st₅) des vorherigen Templates (T) zu verbleibenden Abschnitten (sp₁, ..., sp₈) der Protokollzeile (P) jeweils nur an Positionen zwischen und/oder benachbart zu denjenigen Abschnitten (sp₁, ..., sp₈) der Protokollzeile (P) erfolgt, die bereits entsprechenden Substrings (st₁, ..., st₅) des vorherigen Templates (T) zugeordnet wurden und
- wobei die Abfolge der Substrings (st₁, ..., st₅) des vorherigen Templates (T) und die Abfolge der Abschnitte (sp₁, ..., sp₈) der Protokollzeile (P) bei der Zuordnung jeweils unverändert bleiben.

10. Verfahren nach Anspruch 8 oder 9, **dadurch gekennzeichnet, dass** zunächst nur Substrings (st₁, ..., st₅) des vorherigen Templates (T), deren Länge eine vorgegebene Zeichenanzahl, insbesondere eine Länge von drei Zeichen, überschreitet, für die Zuordnung zu Abschnitten (sp₁, ..., sp₈) der Protokollzeile (P) herangezogen werden.

11. Verfahren nach einem der Ansprüche 8 bis 10, **dadurch gekennzeichnet, dass** diejenigen Substrings (st₁, ..., st₅) des vorherigen Templates (T), die dieselbe Länge aufweisen, in einer vorgegebenen Verarbeitungsrichtung (R), insbesondere von links nach rechts, den Abschnitten (sp₁, ..., sp₈) in der jeweiligen Protokollzeile (P) zugeordnet werden.

12. Verfahren nach einem der Ansprüche 8 bis 11, **dadurch gekennzeichnet, dass** die Zuordnung verbleibender Substrings (st₁, ..., st₅) des vorherigen Templates (T), nur solange erfolgt, als noch Positionen zwischen und/oder benachbart zu denjenigen Substrings (st₁, ..., st₅) des vorherigen Templates (T), die bereits entsprechenden Abschnitten (sp₁, ..., sp₈) der Protokollzeile (P) zugeordnet wurden, frei sind, insbesondere dass diejenigen Substrings (sp₁, ..., sp₈) der Protokollzeile (P), die nicht mehr zugeordnet werden können, nicht im Template (T*) berücksichtigt werden.

13. Verfahren nach einem der Ansprüche 6 bis 12, **dadurch gekennzeichnet, dass**
- zunächst die Substrings (st₁, ..., st₅) des vorherigen Templates (T) gemäß Anspruch 8 oder 9 den jeweils entsprechenden Abschnitten (sp₁, ..., sp₈) innerhalb der Protokollzeile (P) zugeordnet werden, sofern diese in der jeweiligen Protokollzeile (P) vorkommen, und
- anschließend diejenigen Substrings (st₁, ..., st₅) des vorherigen Templates (T), denen noch kein entsprechender Abschnitt (sp₁, ..., sp₈) in der jeweiligen Protokollzeile (P) zugeordnet wurde, gemäß Anspruch 7 zu einer konstanten Zeichenkette (T') zusammengeführt und durch einen Abgleich den verbleibenden Abschnitten (sp₁, ..., sp₈) der Protokollzeile (P) zugeordnet werden.

14. Verfahren nach einem der Ansprüche 6 bis 13, **dadurch gekennzeichnet, dass** bei der Erstellung eines weiteren Templates (T*) die Zwischenräume (g₁, ..., g₄) zwischen den Substrings (st₁, ..., st₅) des vorherigen Templates (T) als Zwischenräume (g*₁, ..., g*4) zwischen den Substrings (st*₁, ..., st*₅) des weiteren Templates (T*) erhalten bleiben,
wobei insbesondere vorgesehen ist, dass vor der Erstellung eines weiteren Templates (T*) an den Positionen der Zwischenräume (g₁, ..., g₄) zwischen den Substrings (st₁, ..., st₅) des vorherigen Templates (T) ein Marker gesetzt wird und an den Positionen des Markers im erstellten weiteren Template (T*) Zwischenräume (g*₁, ..., g*₄) eingefügt werden.

15. Verfahren nach einem der Ansprüche 6 bis 13, **dadurch gekennzeichnet, dass** nach der Erstellung eines weiteren Templates (T*) überprüft wird, ob das erstellte weitere Template (T*) einer Obermenge des vorherigen Templates (T) entspricht, und sofern dies nicht der Fall ist, variable Zwischenräume (g*₁, ..., g*4) in das weitere Template (T*) eingefügt werden, sodass das weitere Template (T*) eine Obermenge des vorherigen Templates (T) beschreibt.

16. Verfahren nach einem der Ansprüche 4 bis 15, **dadurch gekennzeichnet, dass** während der Erstellung weiterer Templates (T*) basierend auf jeweils vorherigen Templates (T) und Protokollzeilen (P) einer jeweiligen Gruppe aus den weiteren Templates (T*) hervorgehende Eigenschaften der jeweiligen Gruppe ermittelt und zur Verfügung gehalten werden, wobei insbesondere vorgesehen ist, dass
- die Länge, insbesondere die minimale und/oder maximale Länge, der Zwischenräume zwischen den Substrings und/oder
- die Strings, die die Zwischenräume zwischen den Substrings füllen und/oder
- die Positionen der ersten Buchstaben eines jeweiligen Substrings ermittelt und zur Verfügung gehalten werden.

17. Datenträger, auf dem ein Programm zur Durchführung eines Verfahrens nach einem der vorangehenden Ansprüche abgespeichert ist.
